# EUROPEAN PATENT SPECIFICATION

(11) **EP 4 486 619 B1**
(45) Date of publication and mention of the grant of the patent: **31.12.2025**
(21) Application number: 22707895.3
(22) Date of filing: 28.02.2022
(51) Int. Cl.: B61B 13/08, B61B 13/10, E01B 25/30, E01D 18/00, E01D 19/00, F16L 1/024, F16L 1/036, F16L 1/10, F16L 3/26

(54) **TRANSPORTATION STRUCTURE**
TRANSPORTSTRUKTUR
STRUCTURE DE TRANSPORT

(43) Date of publication of application: 08.01.2025
(73) Proprietor: ArcelorMittal, 1160 Luxembourg (LU)
(72) Inventor: SELLITTO, Giuseppe, 4000 Liège (BE); GREMLING, Michaël, 4100 Seraing (BE); DI SILVESTRO, Elena, 4140 Sprimont (BE)
(74) Representative: Lavoix
(86) International application number: PCT/IB2022/051724
(87) International publication number: WO 2023/161679

(56) References cited:
- CN-A- 110 886 343
- CN-A- 114 016 383
- KR-B1- 101 830 638
- US-A1- 2018 149 291

## Description

The present invention relates to a transportation structure comprising an assembly of tube segments, capable of being placed under low air pressure and through which pods may travel substantially free of air friction. This transportation system is often referred to as the hyperloop technology.

Hyperloop technology is a proposed high-speed transportation system for both passenger and freight transport. It is basically a sealed system of tubes with low air pressure through which a pod may travel substantially free of air resistance or air friction. It has three major components: a tube, a pod and stations. The tube is a large sealed, low-pressure system that can be constructed above, below or on the ground. It contains the necessary infrastructure to ensure levitation/suspension, propulsion, braking... A vehicle runs inside this controlled environment and is often referred to as a pod. The pod employs electric levitation (either electro-magnetic or electro-dynamic) or aerodynamic levitation (using air-bearing skis) along with electromagnetic or aerodynamic propulsion to glide along a fixed guideway. A station is a facility where a pod can start or stop and where boarding/unboarding of passengers and loading/unloading of cargo are possible. A station is positioned at each extremity of the sealed system of tubes.

Document CN114016383A discloses a portion of a pipeline structure comprising a substructure with a plurality of piers supporting girders as well as an assembly of tube segments.

KR101830638B1 discloses a Super-speed Tube Train using an enclosed space under vacuum in a self supported tube placed on piers, where the structure of the tube includes a longitudinal girder.

In the artists' views, an above-ground hyperloop structure is often represented in the form of tube segments whose ends simply rest on piers regularly spaced. This design is very appealing, but it does not provide a full understanding of important challenges related to such structures. One of these challenges is that the tube segments are huge pieces that deflect between their support points. Consequently the assembly of tube segments is not straight enough to have pods travel smoothly inside.

The aim of the present invention is therefore to remedy the drawbacks of the structures of the prior art by providing a transportation structure wherein the straightness of the assembly of tube segments is improved so that pods can travel smoothly in the assembly of tube segments.

For this purpose, a first subject of the present invention consists of a portion of transportation structure comprising:
- A substructure comprising a plurality of piers, a first plurality of girders positioned on at least some of the piers and forming a first transportation pathway running from a first extremity of the substructure to a second one,
- A first assembly of tube segments, capable of being placed under low air pressure and through which pods may travel substantially free of air friction, the first assembly of tube segments been positioned on the first transportation pathway and each tube segment comprising:
   ∘ a main tube with legs distributed along the length of the main tube and suitable for the main tube to rest on the substructure on its legs,
   ∘ shims positioned in-between the substructure and at least part of the legs, the thickness of each shim been adapted so that the deflection of the substructure between piers is offset.

The portion of transportation structure according to the invention may also have the optional features listed below, considered individually or in combination:
- the main tube is made of steel,
- the legs are regularly distributed along the length of the main tube,
- the legs comprise brackets,
- the legs are part of transverse reinforcements connected to the main tube,
- each transverse reinforcement extends substantially in a plane perpendicular to the longitudinal axis of the main tube,
- the transverse reinforcements are substantially rectangles hollowed in their center for the passing of the main tube,
- the transverse reinforcements comprise two legs,
- The portion of transportation structure further comprises longitudinal stiffeners positioned between the transverse reinforcements,
- the thickness of each shim is adapted so that the deflection of the main tube between piers is inferior to 10mm,
- the thickness of each shim is a function of the distance to the pier,
- The portion of transportation structure further comprises a second assembly of tube segments, capable of being placed under low air pressure and through which pods may travel substantially free of air friction,
- the second assembly of tube segments is positioned on the first assembly of tube segments,
- the second assembly of tube segments is positioned on a second transportation pathway running from the first extremity of the substructure to the second one, alongside the first transportation pathway, and formed by a second plurality of girders positioned on at least some of the piers.

As it is apparent, the invention is based on the construction of a substructure composed of piers and girders which support the tube segments and thus prevent the tube segments from deflecting. In addition, shims are positioned in-between the substructure and the tube segments and the thickness of each shim is adapted to further compensate for the deflection of the substructure between piers.

Other characteristics and advantages of the invention will be described in greater detail in the following description.

The invention will be better understood by reading the following description, which is provided purely for purposes of explanation and is in no way intended to be restrictive, with reference to:
- Figure 1, which is a view of a portion of transportation structure according to a first variant of the invention,
- Figure 2, which is a detailed view of a portion of transportation structure according to a second variant of the invention,
- Figure 3, which is a view of a tube segment
- Figure 4, which is a detailed view of the tube segment of Figure 3,
- Figure 5, which is a detailed view of the connection between a girder and a tube segment,
- Figure 6, which is a view of a portion of transportation structure according to a third variant of the invention,
- Figure 7, which is a view of a portion of transportation structure according to a fourth variant of the invention,
- Figure 8, which is a longitudinal cut of the portion of transportation structure of Figure 8,
- Figure 9, which illustrates the erection of the piers of a portion of transportation structure,
- Figure 10, which illustrates the erection of a first section of the substructure of a portion of transportation structure,
- Figure 11, which illustrates loading girders at the stocking site on vehicles positioned on a first section of the substructure of a portion of transportation structure,
- Figure 12, which illustrates conveying girders to the construction site along the first transportation pathway of the substructure,
- Figure 13, which illustrates positioning girders at the construction site,
- Figure 14, which illustrates positioning platforms at the construction site,
- Figure 15, which illustrates loading tube segments at the stocking site on vehicles positioned on a first section of the substructure of a portion of transportation structure,
- Figure 16, which illustrates conveying tube segments to the construction site along the first transportation pathway of the substructure,
- Figure 17, which illustrates positioning tube segments at the construction site,
- Figure 18, which illustrates conveying tube segments to the construction site along the first transportation pathway of the substructure,
- Figure 19, which is a general view of a portion of transportation structure under construction.

It should be noted that spatially relative terms such as "lower", "beneath", "inward", "inwards", "outward", "outwards"... as used in this application refer to the positions and orientations of the different elements of the portion of transportation structure once the latter has been erected. "Upstream" and "downstream" as used in this application refer to the direction of assembling when starting from a stocking site.

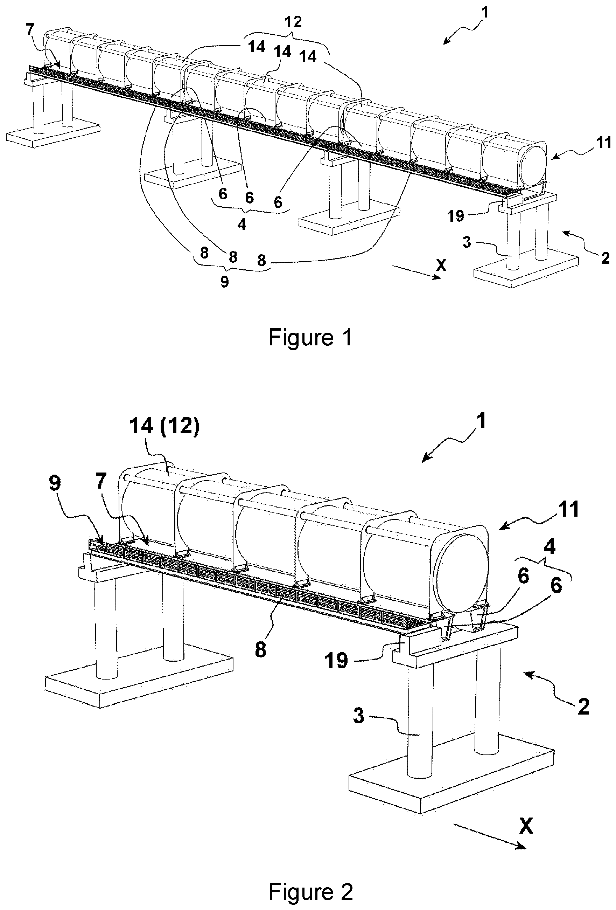

With reference to Figures 1 and 2, the portion of transportation structure 1 according to the invention first comprises a substructure 2 comprising a plurality of piers 3 and a first plurality 4 of girders 6 positioned on at least a part of the piers (i.e. on at least some of the piers) and forming a first transportation pathway 7 running from a first extremity of the substructure to a second one.

According to the embodiment of the invention illustrated on Figures 1 and 2, the substructure has only one transportation pathway.

A portion of transportation structure is composed of a plurality of sections, preferably at least 3 sections. A section is defined by the length of a girder. It preferably matches the distance between two consecutive piers along the longitudinal axis X of the portion of the transportation structure.

A pier 3 is an upright support for a structure or superstructure such as an arch or bridge. It supports the superstructure and transfers loads of the superstructure to the foundations. The shape of the piers according to the invention is not particularly limited as long as they can support the first above-mentioned transportation pathway and optionally the service pathway.

According to a first variant illustrated on Figure 1, the piers are pile bent piers, i.e. piers made of two or more columns supporting a pier cap. The piers substantially extend in a plan perpendicular to the route, i.e. perpendicular to the girders' length.

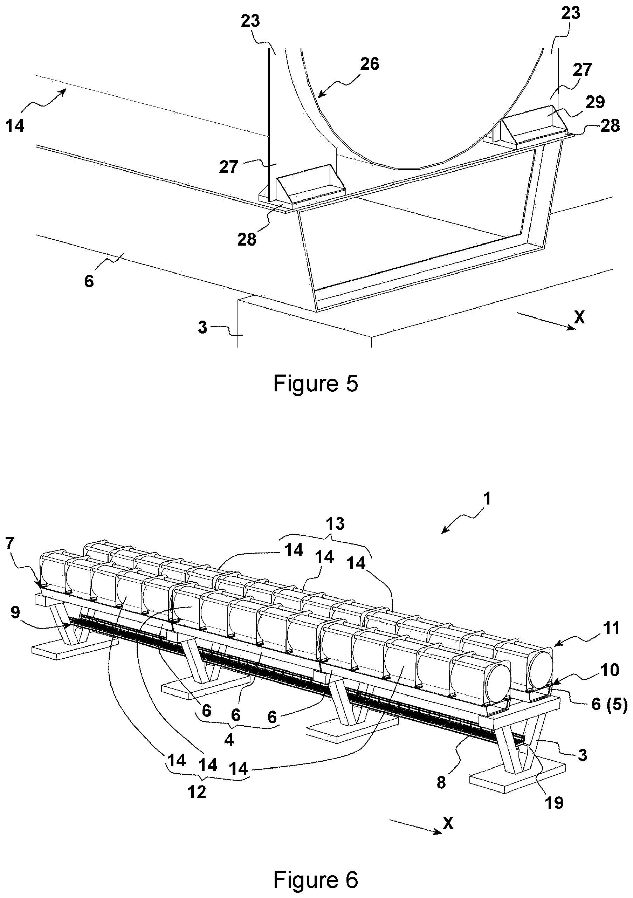

According to a second variant illustrated on Figure 6, the piers are V-shaped. The V substantially extends in a plan perpendicular to the route, i.e. perpendicular to the girders' length. The piers comprise two inclined arms, extending outwards. They can also comprise a pier cap, in the form of a horizontal beam linking the two arms. This pier cap provides additional seating for the girders and better distributes the load from the girders to the piers.

Others shapes such as Y, X, H, hammerhead piers, cantilevered piers, trestle piers, solid piers, simple columns are also possible.

The piers are preferably substantially regularly spaced along the longitudinal axis X of the portion of the transportation structure.

The substructure 2 of the portion of transportation structure 1 according to the invention also comprises a first plurality 4 of girders 6 positioned on at least some of the piers 3 and forming a first transportation pathway 7 running from a first extremity of the substructure to a second one.

A girder 6 is a support beam used in construction. It can be made of steel or concrete or it can be a composite structure. It can be in the form of a I-beam cross section composed of two load-bearing flanges separated by a stabilizing web. It can be in the form of a plurality of longitudinal members joined by cross-members. In the variants illustrated in Figures 1 and 2, the girders are box girders, i.e. girders that form an enclosed tube with multiple walls. Box girders are advantageous notably in that electrical wires can be positioned inside.

Preferably each girder 6 extends from one pier to the adjacent one. In particular the first end of the girder rests on a given pier and the second end of the girder rests on an adjacent pier along the longitudinal axis X of the portion of the transportation route or structure. The girders can thus be easily installed by simply positioning them on the piers. Alternatively, a girder can extend on more than two piers.

The first plurality 4 of girders 6 is positioned along the longitudinal axis of the portion of the transportation route or structure, so as to form a first transportation pathway 7. By transportation pathway, it is meant at least one continuous track designed to withstand the transportation of heavy parts like girders, platforms or tube segments with vehicles and designed to support the superstructure once the latter is positioned on the transportation pathway. For the sake of clarity, a transportation pathway is a temporary pathway; it allows the transportation of elements only during the erecting phase. Once an assembly of tube segments has been positioned on the transportation pathway, the latter is not a pathway anymore. The transportation pathway extends from the first longitudinal extremity of the substructure to the second longitudinal extremity of the substructure, whatever the length of the substructure.

According to a first variant of the transportation pathway illustrated on Figure 1, the first transportation pathway 7 is composed of one single continuous track of girders. In other words, all the girders 6 of the first plurality 4 of girders are positioned successively and continuously one after the other along the longitudinal axis X of the portion of the transportation structure. In that case, the girders are large enough to have vehicles circulate on them. This transportation pathway can be a substantially flat surface of metal or of concrete, preferably the upper surface of the girders. It can also be a railroad line which is part of the upper surface of the girders.

According to a second variant of the transportation pathway illustrated on Figure 2, the transportation pathway 7 is composed of two continuous tracks of girders 6, running parallel to one another. In other words, half the girders of the first plurality 4 of girders are positioned successively and continuously one after the other along the longitudinal axis of the portion of the transportation structure and half the girders of the first plurality 4 of girders are positioned successively and continuously one after the other and parallel to the first half. In that case, the girders are not large enough to have vehicles circulate on them but the two continuous tracks are spaced from one another so that vehicles can circulate with their inward wheels on the inward track and their outward wheels on the outward track. Rail beams can be part of the upper surface of the girders so that the two continuous tracks form a railroad line.

Optionally, bearings are positioned between the piers and the girders. A bearing is a device which supports the girders and transfer loads and movements from the girders and superstructure to the substructure and foundation. The bearings permit controlled movement and decrease the stress involved.

Thanks to the first plurality 4 of girders 6, during the construction phase, vehicles circulating on the part of the substructure already in place can easily transport each additional element of the portion of transportation structure to its position. Access to the ground along the construction route might not be necessary anymore. This advantage will be further detailed when describing the erection method. During operation, the first plurality of girders supports the tube segments and contributes to the straightness of the assembly of tube segments. This straightness is important for the smooth traveling of the pods within the tube. Moreover, the combination of girders and tube segments acts as a beam which significantly increases the lateral torsional buckling of the structure.

With reference to Figures 1 and 2, the transportation structure according to the invention further comprises a superstructure 11 comprising a first assembly 12 of tube segments 14 positioned on the first transportation pathway, the first assembly being capable of being placed under low air pressure and capable of allowing the circulation of pods travelling substantially free of air friction in the tube segments. By "low air pressure", it is meant an air pressure below atmospheric pressure, preferably below or equal to 10 kPa, more preferably between 10 Pa and 10 kPa.

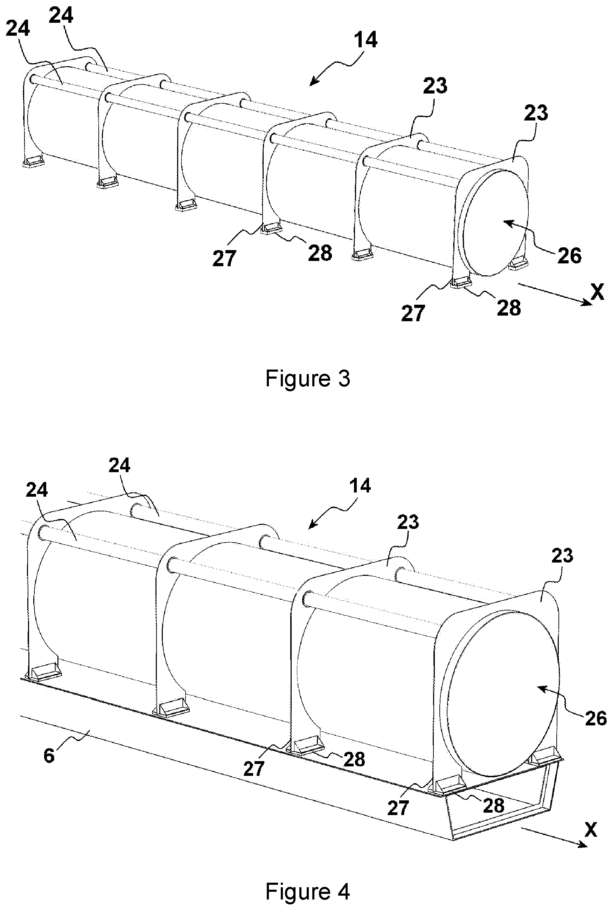

With reference to Figures 3 to 5, each tube segment 14 comprises:
∘ a main tube 26 with legs 27 distributed along the length of the main tube and suitable for the main tube to rest on the substructure on its legs,
∘ shims 28 positioned in-between the substructure and at least part of the legs.

Practically speaking, the capability of the assembly to be placed under low air pressure is conferred by the features of the main tube wall, the features of the connection between main tubes and the pumping equipment. In particular, the main tube wall has to be airtight. Different ways of making a tube wall airtight are well known and the person skilled in the art will know how to select the features of the wall in each specific case. It can be for example a metallic tube made of welded plates or a metallic structure covered by an airtight membrane. Also, the connection between two main tubes has to be airtight. The airtightness of the connection can notably be provided by welding, by the addition of components such as an elastomer between main tubes that are bolted or clamped, or by means of an expansion joint. The person skilled in the art knows how to make connections airtight and will adapt the connection to each specific case. Also, the pumping equipment has to be correctly dimensioned so that a low air pressure can be reached and maintained in the assembly of tube segments, while taking into account the air leakages under operation. The person skilled in the art knows how to do so and will adapt the pumping equipment to each specific case.

Practically speaking, the capability of the assembly to allow the circulation of pods travelling substantially free of air friction in the tube segments is conferred by the infrastructure positioned inside the tube segments and which provide notably the levitation/suspension, propulsion, braking... Such infrastructures are already well known and the person skilled in the art will know how to adapt the infrastructure to each specific case.

The design of the main tube 26 is not limited as long as main tubes of the tube segments can be connected to one another, by their longitudinal ends, directly or indirectly, along the longitudinal axis so as to form an assembly as described above. In particular, the cross-section of the main tube is not limited. It can notably be a circular cross-section or a polygonal cross-section.

According to one variant of the invention, the main tube is made of steel plates welded to one another.

According to another variant, the tube segment comprises a plurality of wall segments connected together by their longitudinal edges. Adjacent wall segments are arranged edge to edge along a junction line. Their edges can comprise flanges to ease the assembling. Each wall segment can comprise at least one central panel and two side panels. The side panels extend on both sides of the central panel over the circumference of the tube segment. They laterally enclose the central panel. The side panels form an angle with the central panel(s). This type of wall segment has the advantage of being easily obtained by simple folding of a metal sheet. The side panels stiffen the wall segments and increase the bending strength of said segments in the longitudinal direction.

According to another variant, the tube segment is a double-walled tube segment wherein the space between the exterior tube and the interior tube is filled with a stiffening compound.

According to another variant, the tube segment comprises a plurality of longitudinal stringers mounted to a plurality of circumferential sections to form a skeletal framework, on which skin sections are attached air-tightly.

According to another variant, the tube segment comprises a plurality of elongated outer skin panels forming the outer wall of a double-walled tube segment. The panels are curved so that their assembling form a smooth cylindrical surface. They can have embossed indentation to increase buckling resistance. The tube segment also comprises inner sheet parts, forming the inner wall of the double-walled tube segment, welded to each other to obtain a an airtight connection and welded to the elongated outer skin panels.

According to another variant, the tube segment comprises elongated curved outer shell parts forming the outer wall of a double-walled tube segment, an inner wall in the form of a regular N-facetted polygonal tube, and interlayer shell parts whose inward side is flat and whose outward side has the same curvature as the elongated curved outer shell parts.

The main tube is preferably made of steel. Steel has the advantages of being light, easily vacuum-tight and recyclable.

The main tube 26 further comprises legs 27 distributed along its length and suitable for the main tube, i.e. for a tube segment, to stand alone on the substructure on its legs. The number of legs and their position on the main tube can be optimized during the structural design phase. Preferably, the legs are regularly distributed along the length of the main tube.

The legs can be directly fastened to the main tube. They can notably be welded on the main tube.

The footprint of the legs is not limited. It can be easily optimized during the structural design phase. The legs can consist of a local enlargement of the structural elements forming the tube element. They can also comprises brackets 29, notably to increase the stability of the tube segment.

The legs can be part of transverse reinforcements 23. In a variant illustrated on Figures 3 to 5, the transverse reinforcements 23 extend substantially in a plane perpendicular to the longitudinal axis X of the portion of transportation structure, i.e. perpendicular to the longitudinal axis of the main tube. They are preferably spaced along the length of the girder, i.e. along the longitudinal axis X. More preferably, they are regularly spaced. They preferably extend horizontally beyond the main tube on each side to stiffen the main tube they are connected to. They preferably extend vertically beyond the upper end of the main tube to further stiffen it. They can be made of, for example, flat panels, corrugated panels or flat panels reinforced with stiffeners. Each transverse reinforcement preferably comprises two legs. More preferably, it comprises one leg on each side of the main tube.

According to the variant illustrated on Figures 3 to 5, a transverse reinforcement 23 extends horizontally so as to match the contour of the cross-section of the main tube. In particular, the transverse reinforcement is substantially a square or a rectangle hollowed in its center for the passing of the main tube. It further stiffens the main tube.

The transverse reinforcement can comprise two transverse reinforcement sections, one on each side of the tube segment. In particular, a transverse reinforcement section positioned on one side of the tube segment faces the transverse reinforcement section positioned on the other side of the tube segment. More particularly, the two transverse reinforcement sections are connected to one another.

Alternatively, a transverse reinforcement 23 can comprise a lower horizontal beam positioned below the main tube, an upper horizontal beam positioned above the main tube and at least one vertical beam connected to the lower and upper horizontal beams. The transverse reinforcement preferably comprises two vertical beams positioned on each side of the main tube, connected to the lower and upper horizontal beams so as to form a square/rectangular cross-section embedding the tube segment.

In a variant illustrated on Figures 3 to 5, the tube segment can comprise transverse reinforcements 23 and longitudinal stiffeners 24 between the transverse reinforcements. The transverse reinforcements can be as described above. The longitudinal stiffeners are preferably beams, in particular tubular beams. Each longitudinal stiffener is preferably connected to two consecutive transverse reinforcements. It is preferably positioned above the main tube, i.e. in an area of the tube segment which is in contraction because of the deflection of the girder, which deflects the tube segment. The longitudinal stiffeners further limit the deflection of the main tube and thus further improves the straightness of the assembly of tube segments. The longitudinal stiffeners further stiffen the tube segment during transportation. The tube segment preferably comprises two pluralities of longitudinal stiffeners, one on each side of the main tube.

Shims 28 are positioned in-between the substructure and at least part of the legs. They are mainly defined by their thickness. Their footprint is preferably similar to the footprint of the legs.

The thickness of each shim is adapted so that the deflection of the substructure between piers is offset. Consequently, the assembly of tube segments is straight. By "offset" it is meant that the deflection of the girder is sufficiently compensated by the shims so that the straightness of the assembly of tube segments is sufficient to have pods travel smoothly in the assembly of tube segments. Preferably the thickness of each shim is adapted so that the deflection of the main tube between piers is inferior to 10mm, more preferably inferior to 5 mm, even more preferably inferior or equal to 2mm.

In a first variant of the tube segment, the shims 28 are pre-assembled to at least part of the legs 27 of the tube segment during its manufacturing. In that case, the positions and the thickness of the shims, which are needed to minimize the deflection of the main tube between piers, is calculated by means of structural analyses during the structural design phase, i.e. prior to the erection phase. It speeds up the erecting phase.

In a second variant of the tube segment, the shims are added in-between the girder and at least part of the legs when the tube segment is positioned on the girder. In that case, the positions of the shims and their thickness can still be calculated by structural analyses during the structural design phase but adjustments on the fly can be done in case the actual deflection of the girder differs from the results of the structural analyses for some reason.

The thickness of the shims along tube segments is typically comprised between 0 and 50 mm, depending on the span between piers.

The thickness of each shim is a function of the distance to the closest pier. Standard formulas for the deflection of common beam configurations and load cases at discrete locations are well known. Otherwise, methods such as virtual work, direct integration, Castigliano's method, Macaulay's method or the direct stiffness method are used. The deflection of beam elements is usually calculated on the basis of the Euler-Bernoulli beam equation. Consequently, the thickness of each shim can be easily estimated.

According to a first embodiment of the superstructure illustrated on Figure 1 and 2, the superstructure has only one assembly of tube segments 14 positioned on a substructure having only a first transportation pathway 7.

According to a second embodiment of the superstructure, the superstructure comprises a first assembly 12 of tube segments 14 and a second assembly 13 of tube segments 14, each assembly of tube segments being capable of being placed under low air pressure and capable of allowing the circulation of pods travelling substantially free of air friction in the tube segments. The characteristics and variants of the tube segments of the first assembly detailed above also apply to the tube segments of the second assembly. Tube segments of the first assembly and tube segments of the second assembly can be identical to ease logistics.

According to a first variant of this embodiment, the substructure supporting the first and second assembly of tube segments has only a first transportation pathway 7. In that case, the second assembly 13 of tube segments 14 is positioned on the first assembly 12 of tube segments 14. In particular each tube segment of the second assembly of tube segments is positioned on a tube segment of the first assembly of tube segments. This positioning limits the footprint of the transportation structure. It also reduces the amount of switches and facilitates surface use, in particular for deviating towards stations. Optionally, each tube segment of the first assembly of tube segments is coupled to a tube segment of the second assembly of tube segments before being conveyed to the construction site. The coupling can be done with transversal connectors and/or with a structure surrounding the two tube segments. In that case, tube segments of the first assembly and tube segments of the second assembly are conveyed simultaneously along the first transportation pathway 7 as it will be further detailed when describing the erection method. It speeds up the transportation of the elements to the construction site and thus shortens the erection phase. According to that variant, the first transportation pathway can be made of a first plurality 4 of girders 6 indifferently laid out in one single continuous track of girders or in two continuous tracks of girders 6, running parallel to one another.

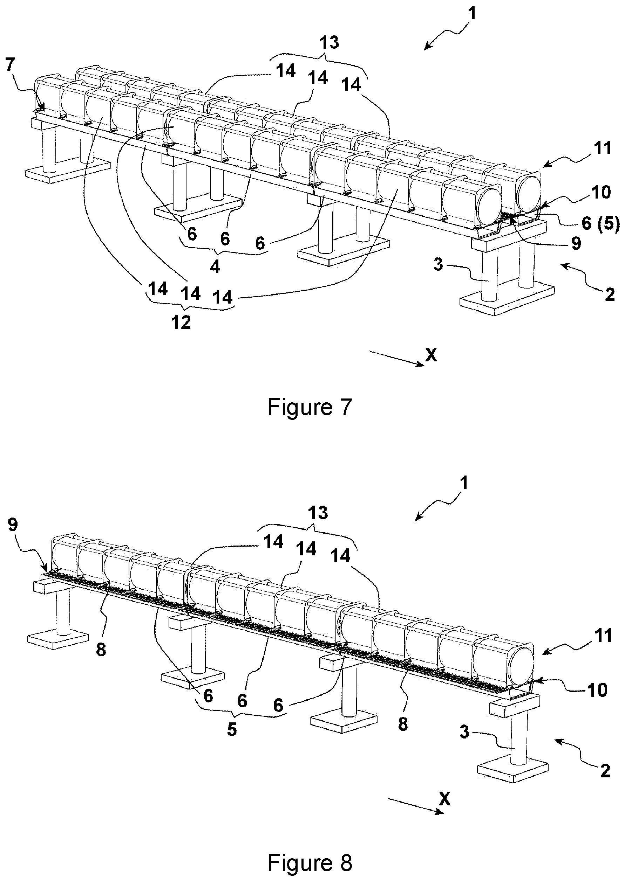

According to a second variant of this embodiment illustrated on Figures 6 and 7, the second assembly 13 of tube segments 14 is positioned on a second transportation pathway 10 running from the first extremity of the substructure to the second one, alongside the first transportation pathway 7 and formed by a second plurality 5 of girders 6 positioned on at least some of the piers. The definition and variants detailed in relation to the first transportation pathway apply here. Girders of the first plurality and girders of the second plurality can be identical to ease logistics.

The second transportation pathway 10 runs alongside the first transportation pathway 7. By alongside, it is meant that both transportation pathways are substantially parallel to each other and run adjacent to each other. It is not limited to transportation pathways at the same level and/or rigorously parallel. The space between the first and second transportation pathways and/or the level of the first and second transportation pathways can be adjusted to the topography of land.

The first plurality 4, respectively second plurality 5, of girders 6 can be positioned on all the piers as illustrated on Figures 6 and 7. Generally speaking, the first plurality 4, respectively second plurality 5, of girders 6 is positioned on all the piers when each pier extends transversely enough to support both the first plurality of girders and the second plurality of girders. Alternatively, the first plurality 4, respectively second plurality 5, of girders 6 is positioned only on a part of the piers, as in the case for example of piers in the form of columns where half of the piers support the first plurality of girders and half of the piers support the second plurality of girders.

Optionally, the substructure 2 of the portion 1 of transportation structure according to the invention can further comprise a plurality of platforms 8 positioned on the piers or connected to the girders of the first transportation pathway and forming a service pathway 9 running from the first extremity of the substructure to the second one. By service pathway, it is meant at least one continuous track designed to withstand vehicle traffic. It differs from a transportation pathway in that it is not designed to withstand the transportation of heavy parts like girders, platforms or tube segments and it is not designed to support the superstructure. The service pathway extends from the first longitudinal extremity of the substructure to the second longitudinal extremity of the substructure, whatever the length of the substructure. For the sake of clarity, the service pathway is above ground. It runs substantially parallel to the first transportation pathway.

A platform is a light structure suitable for vehicle traffic. The platforms are preferably made of steel. They preferably comprise a traffic deck, i.e. a surface suitable for vehicle traffic, possibly reinforced underneath by longitudinal reinforcements and/or transversal reinforcements. These reinforcements add structural rigidity to the traffic deck. The traffic deck can also comprise safety rails along the longitudinal edges of the traffic deck for safety reasons. The traffic deck, the reinforcements and the safety rails are preferably made of steel. The traffic deck is preferably a perforated surface, like a perforated steel sheet or metal grid.

There are different ways to link the platforms 8 to the rest of the substructure 2. According to a first variant of the platform positioning, illustrated on Figures 1 and 2, the platforms 8 are supported by the piers 3. Preferably, the longitudinal ends of the platforms are supported by the piers. In that case, the platforms have preferably the same length as the girders.

Consequently, the piers can comprise a bearing area 19, which can be for example a portion of the shape itself of the piers or an anchor point added to the pier. In the case illustrated on Figures 1 and 2, the bearing area 19 is in the form of a protrusion extending above a part of the pier cap. In that case, the platforms of the service pathway, in particular their longitudinal ends, can simply rest on the protrusions. In the case illustrated on Figure 6, the bearing area 19 is in the form of a protrusion extending inwards from an arm of the V-shaped pier. In that case, the platforms of the service pathway, in particular their longitudinal ends, can simply rest on the protrusions. Preferably, the two arms comprise a bearing area. More preferably, the bearing areas of the two arms of a given pier are substantially flush, i.e. at the same level, so that the platforms of the service pathway can more stably rest on the bearing areas. Alternatively, the platforms of the service pathway can rest on other parts of the pier, such as the horizontal beam of a H-shaped pier if applicable, or can be anchored to a column.

For this first variant of the platform positioning, the service pathway 9 can run in-between the first and the second transportation pathways, at the same level or not. On Figure 6, the service pathway is positioned transversally between the first transportation pathway and the second transportation pathway and vertically below the first transportation pathway and the second transportation pathway. In particular, a platform is positioned transversally between a girder of the first plurality of girders and a girder of the second plurality of girders and vertically below these two girders. This position is very convenient for the circulation of vehicles on the substructure during the construction phase as it will be further detailed when describing the erection method. Other positions of the service pathway are of course possible depending on the design of the piers and the position of the bearing areas.

According to a second variant of the platform positioning, illustrated on Figures 7 and 8, the platforms are supported by the girders. In that case, the platforms can have the same length as the girders or can be of shorter length, preferably so that the platform's length is a divisor of the girder's length. Preferably, the platforms are positioned in-between the girders of the first transportation pathway 7 and the girders of the second transportation pathway 10. More preferably, the first longitudinal edge of the platforms rests on the inward longitudinal edge of a girder 6 from the first plurality 4 of girders and the second longitudinal edge of the platforms rests on the inward longitudinal edge of a girder 6 from the second plurality 5 of girders. The platform can be at the same level as the girders or not. In particular, the traffic deck of the platforms can be at the level of the upper surface of the girders, or above or below. It is preferably at the level of the upper surface of the girders to ease vehicle traffic.

Thanks to the service pathway 9, during the construction phase, the vehicles having moved an element to the construction site can return to the stocking site without preventing other vehicles from transporting the next elements to the construction site. It speeds up the transportation of the elements to the construction site and thus shortens the erection phase. This advantage will be further detailed when describing the erection method. During operation, the service pathway can be advantageously used for maintenance, inspection and/or as an escape route. The service pathway can be permanent or temporary.

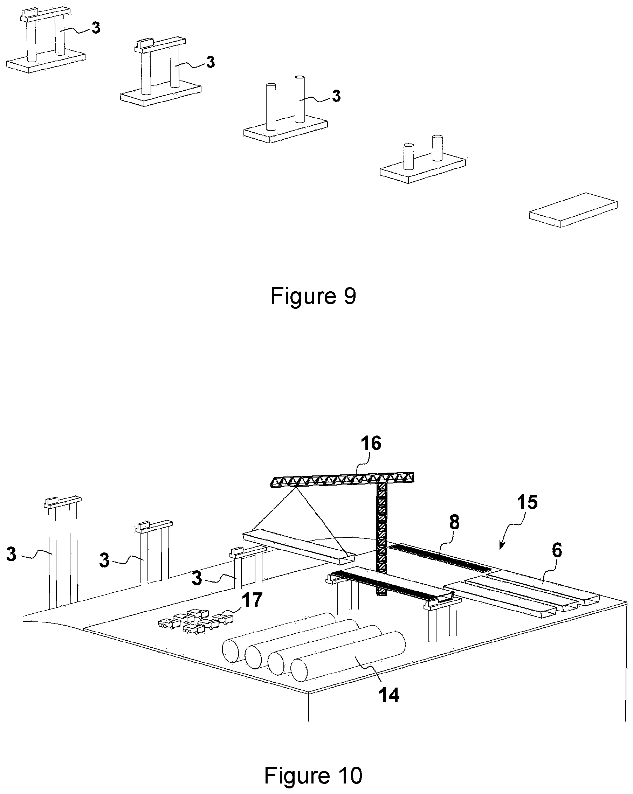

With reference to Figures 9 to 19, a method for erecting a portion 1 of the transportation structure according to one variant of the invention will now be described. Overall, this method comprises a first step of erecting the substructure 2 and a second step of erecting the superstructure 11. The step of erecting the substructure is described first.

In a first step of erecting the substructure 2, illustrated on Figure 9, the piers 3 of the portion 1 of the transportation structure are erected. They can be erected with any suitable method, such as panel formwork for example. Their erecting method includes the erection of piers foundations as required by the nature of the ground. This step can be done before the step of positioning the girders 6 or at least partially at the same time as the step of positioning the girders. In other words, the piers can be erected well before the girder positioning starts, for example weeks before. This notably gives time for concrete drying and soil compaction. Alternatively, some piers are still being erected when the girder positioning starts on the first erected piers.

As the footprint for erecting piers is limited and only light-duty vehicles are needed (bulldozers, concrete mixer trucks), the piers are preferably erected by ground access to the construction site of each pier.

In a second step of erecting the substructure 2, the girders 6 and platforms 8 of the portion 1 of transportation structure are erected.

As mentioned above, the erection of girders and platforms starts from a stocking site 15 where at least part of the elements of the transportation structure are stocked. Depending on the ease of transporting the elements up to the stocking site, some elements can be manufactured at the stocking site in manufacturing facilities. It can for example be the case of the girders and/or of the tube segments which are massive pieces. Manufacturing some elements on the stocking site minimizes the erection time at the construction site and it allows for better quality control of the manufactured elements.

The stocking site 15 is preferably located at the future site of a station, in particular a passenger and/or freight station. This limits the footprint of the construction phase. It also limits the civil work. In particular, the civil work done to build the stocking site and its optional manufacturing facilities can be used for erecting the station. The stocking site is preferably located at the ground level.

As illustrated on Figure 10, the first sub-step in erecting the girders 6 and platforms 8 is at the stocking site 15. This sub-step comprises the erection, at the stocking site, of a first section of the substructure comprising at least one pier 3, at least a girder 6 from the first plurality of girders and at least a platform 8. In particular, this sub-step comprises positioning a girder from the first plurality of girders on at least one pier. This positioning is preferably done with a crane 16 which can pick the elements on the stocking site and move them to the piers. The assembling order of the girder(s) and platform(s) can vary depending on the design of the substructure and notably depending on how the platform is linked to the rest of the substructure.

According to a first variant, the first section of substructure comprises one single pier. This is notably the case when the stocking site is positioned on a high ground. The first extremity of the first girder can then rest on the high ground while the second extremity of the first girder can rest on the pier positioned downhill. In that case, the first sub-step comprises positioning a girder from the first plurality of girders between the high ground and the pier.

According to a second variant illustrated on Figure 10, the first section of substructure comprises two piers. This is notably the case when the stocking site is positioned on a substantially flat ground. The first extremity of the first girder can then rest on the first pier while the second extremity of the first girder can rest on the second pier. In that case, the first sub-step comprises positioning a girder from the first plurality of girders on the two piers.

This first sub-step can comprise the erection, at the stocking site, of other sections of the substructure. The number of sections erected at the stocking site is conditioned by the ability of the crane from the stocking site to position the elements on the piers.

Once the first section of the substructure has been erected, it comprises a first extremity adjacent to the stocking site and a second extremity at its opposite end. The first extremity of the first section corresponds to the first extremity of the substructure of the portion of transportation structure erected according to the invention. Consequently, the position of the first extremity of the substructure of the portion of transportation structure erected according to the invention will not change over time during the erection of the portion of transportation structure. As for the second extremity of the first section, it corresponds to the second extremity of the substructure under construction, as long as no other section of substructure has been erected downstream of the first section. In other words, the position of the second extremity of the substructure under construction will change over time each time a new section is erected downstream of the already erected sections of transportation structure.

Thanks to the elements composing the erected substructure, vehicles 17 can circulate on the first transportation pathway 7 formed by at least one girder 6 of the first plurality 4 of girders and on the service pathway 9 formed by at least one platform 8. In particular, vehicles moving the elements to be positioned along the construction route can circulate on the first transportation pathway, starting from the first extremity and up to the second extremity of the substructure under construction. Once the elements have reached their use position, the vehicles can return to the first extremity via the service pathway.

Consequently, in a second sub-step in erecting the girders 6 and platforms 8, another section of the substructure can be erected as detailed hereafter. This section is referred to below as "the second section" for simplicity, assuming that only a first section has been erected at the stocking site.

The second section of the substructure comprises at least one girder 6 of the first plurality 4 of girders, at least one platform 8 of the plurality of platforms and at least one pier 3 of the substructure.

As explained above with regard to the pier erection, at least an additional pier has been erected downstream of the first section of the substructure.

Vehicles 17 suitable for the transport of heavy elements are positioned on the first section of the substructure, in particular on the first transportation pathway 7, more particularly on the first girder 6 of the first plurality 4 of girders. The vehicles can be lifted with a crane 16 or can reach their position with an access ramp or any other suitable equipment. The type of vehicles is not limited. It can be wheeled vehicles, such as trucks or train locomotives. Depending on the type of vehicles, the element(s) to be transported can be either loaded on one vehicle or loaded on several vehicles at the same time or the vehicle can be simply connected to the element(s), as in the case of a train locomotive for the transport of element(s) equipped of railroad wheels. In this description, the terms "set up" and "pair" are used to designate equally the loading of the vehicle(s) with an element and the connection of the vehicle(s) with an element. The term "freed" is used to designate equally the unloading of an element from the vehicle(s) and the disconnection of the vehicle(s) with an element.

Some vehicles are set up with the girder(s) and platform(s) of the second section of the substructure. In particular, vehicle(s) are set up with at least one girder 6 of the first plurality 4 of girders and vehicle(s) are set up with at least one platform 8. The elements can be conveyed from the stocking site on the first section of the substructure or can be lifted from the stocking site up to the first section of the substructure with a crane. In the first case, they can be conveyed by the vehicles themselves. In the second case, the vehicles can be positioned and then set up.

The elements are then conveyed with the vehicles from the first extremity to the second extremity of the substructure under construction, which is adjacent to their use position. In particular:
- The at least one girder 6 of the first plurality 4 of girders is conveyed along the first transportation pathway 7 formed by the girders of the first plurality of girders positioned on the first section of substructure,
- The at least one platform 8 is conveyed along the first transportation pathway.

The order in which the elements are paired with vehicles and conveyed to the second extremity is not limited. Also, some elements can be conveyed to the second extremity while others are still being set up on vehicles.

Once an element has been conveyed to the second extremity of the substructure under construction, it is positioned at its use position, i.e. its position of service in the substructure. In particular:
- The at least one girder 6 of the first plurality 4 of girders is positioned downstream of the first transportation pathway 7. In particular, it is positioned after the girder of the first transportation pathway forming the second extremity of the substructure under construction. More particularly, it is positioned in line with the girder 4 of the first transportation pathway 7 forming the second extremity along the longitudinal axis X. Even more particularly, it is positioned so that a first end of the girder rests on the pier forming the second extremity of the first section of substructure and a second end of the girder rests on the at least one additional pier erected downstream of the first section of substructure. The at least one girder of the first plurality of girders is preferably positioned with a crane 18, more preferably with a girder launcher crane, supported by the substructure itself.
- The at least one platform 8 is positioned downstream of the service pathway 9. In particular, it is positioned after the platform of the service pathway forming the second extremity of the substructure under construction. More particularly, it is positioned in line, along the longitudinal axis X, with the platform of the service pathway forming the second extremity. Even more particularly, it is positioned so that a first end of the platform rests on the pier forming the second extremity of the first section of substructure and a second end of the platform rests on the additional pier erected downstream of the first section of substructure. The at least one platform is preferably positioned with the crane, more preferably with the girder launcher crane.

The use of a crane 18 supported by the substructure is beneficial. It further limits the footprint of the erection by eliminating the need for ground access to the construction site and ground preparation for a crane. It also makes the erecting method further independent of the topography and roughness of the terrain.

Once an element has been positioned, the corresponding freed vehicle(s) can return to the first extremity of the substructure along the service pathway. In particular:
- The vehicle(s) 17 freed from the at least one girder 6 of the first plurality 4 of girders is moved from the first transportation pathway 7 to the service pathway 9. In the case where the service pathway is not at the level of the first transportation pathway, the vehicle(s) can be lifted by a crane and put down on the service pathway. Preferably it is lifted with the girder launcher crane.
- The vehicle(s) 17 freed from the at least one platform 8 is moved from the first transportation pathway 7 to the service pathway 9. In the case where the service pathway is not at the level of the first pathway, the vehicle(s) can be lifted by a crane and put down on the service pathway. Preferably it is lifted with the girder launcher crane.

The order in which the elements are positioned is not limited. Also, some elements can be positioned while others are still being paired with vehicles or conveyed to the second extremity. Preferably, the at least one platform 8 is positioned first so that the vehicle(s) freed from the at least one girder 6 of the first plurality 4 of girders can be more easily transferred to the service pathway.

Once a second section of the substructure has been erected as detailed above, other sections of the substructure can be erected one after the other according to a similar process and as detailed below in relation to the erection of the xth section of the substructure.

The xth section of the substructure comprises at least the nth girder 6 of the first plurality 4 of girders, at least the yth platform 8 of the plurality of platforms and at least the zth pier 3 of the substructure. By default, x, y, z and n are different. In case where each section of the substructure comprises one single girder of the first plurality of girders and one single platform, x is equal to n and y. In that case, the nth girder of the first plurality of girders is also the xth and the yth platform of the plurality of platforms is also the xth. In case where the first section comprises 2 piers and the first transportation pathway 7 is composed of one single continuous track of girders and each section of the substructure other than the first one comprises one single pier, z is equal to n+1.

At least the zth pier 3 has first been erected downstream of the (x-1) first sections.

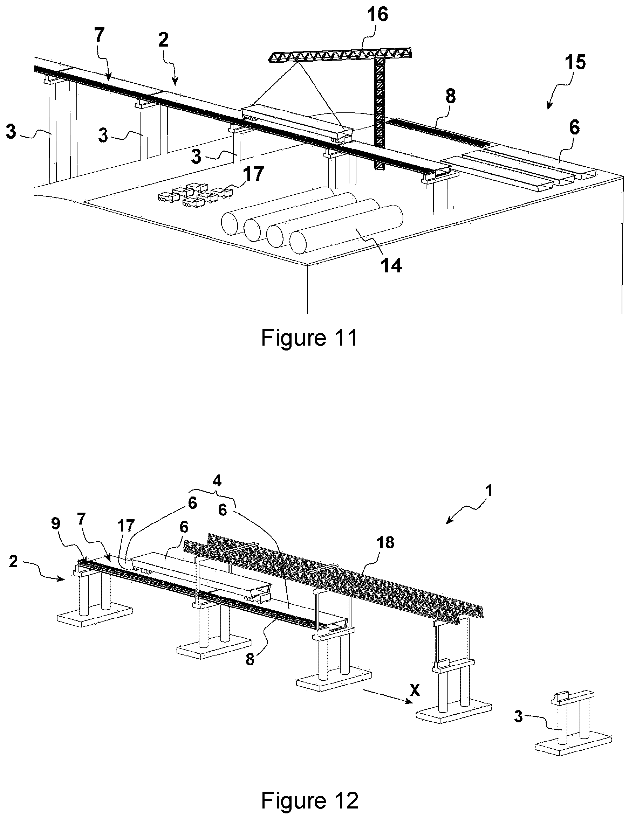

As illustrated on Figure 11, the vehicles 17 which have returned to the first extremity of the substructure after being freed from the girder(s) and platform(s) of a previous section(s) of the substructure are set up with the girder(s) of the first plurality and the platform(s) of the xth section of the substructure. In particular, vehicle(s) are set up with at least the nth girder of the first plurality of girders and vehicle(s) are set up with the yth platform of the plurality of platforms. If the xth section comprises additional girder(s) of the first plurality and/or platform(s), they are paired with the vehicles similarly.

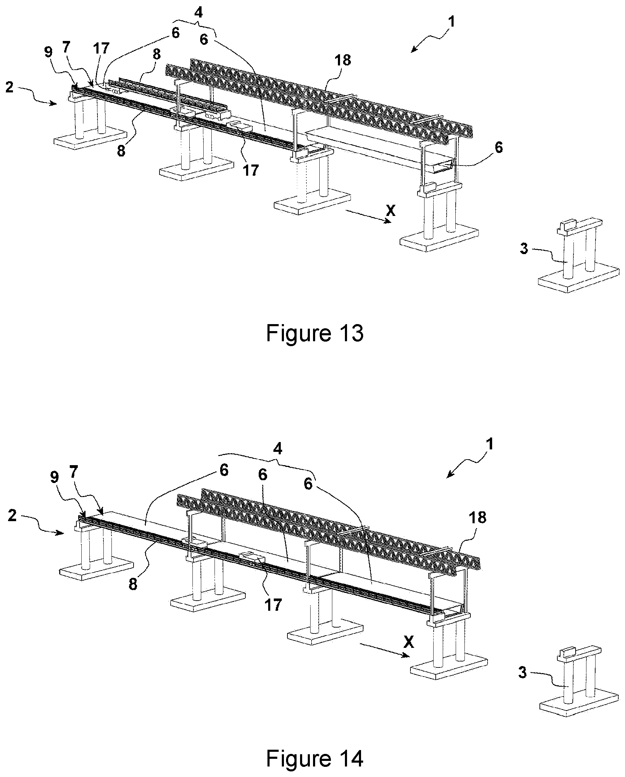

As illustrated on Figures 12 and 13, starting from the first extremity of the substructure, the girder(s) 6 and platform(s) 8 of the xth section of the substructure are conveyed with vehicles from the first extremity to the second extremity of the substructure under construction, which is adjacent to their use position. In particular:
- The nth girder 6 of the first plurality 4 of girders is conveyed along the first transportation pathway 7 formed by the (n-1) girders of the first plurality of girders previously positioned. In particular, it is conveyed along the first transportation pathway 7 formed by the girders of the first plurality of girders previously positioned.
- The yth platform 8 of the plurality of platforms is conveyed along the first transportation pathway 7 formed by the girders of the first plurality of girders previously positioned.

If the xth section comprises additional girder(s) of the first plurality and/or platform(s), they are conveyed similarly. The order in which the elements are paired with vehicles and conveyed to the second extremity is not limited. Also, some elements can be conveyed to the second extremity while others are still being paired with vehicles.

As illustrated on Figures 13 and 14, once an element has been conveyed to the second extremity of the substructure under construction, it is positioned at its use position. In particular:
- The nth girder 6 of the first plurality of girders is positioned downstream of the first transportation pathway 7. In particular, it is positioned after the girder of the first transportation pathway forming the second extremity of the substructure under construction. More particularly, it is positioned in line, along the longitudinal axis, with the (n-1)th girder of the first transportation pathway. Even more particularly, it is positioned so that a first end of the nth girder rests on the pier forming the second extremity (the (z-1)th pier) and a second end of the nth girder rests on the zth pier erected downstream of the substructure. The nth girder of the first plurality of girders is preferably positioned with a crane 18, more preferably with a girder launcher crane, supported by the substructure itself,
- The yth platform 8 is positioned downstream of the service pathway. In particular, it is positioned after the (y-1)th platform of the service pathway, i.e. the platform of the service pathway forming the second extremity of the substructure under construction. More particularly, it is positioned in line, along the longitudinal axis, with the platform of the service pathway forming the second extremity. Even more particularly, it is positioned so that a first end of the yth platform rests on the pier forming the second extremity (the (z-1)th pier) and a second end of the yth platform rests on the zth pier erected downstream of the substructure. The yth platform is preferably positioned with a crane 18, more preferably with a girder launcher crane, supported by the substructure itself,

As illustrated on Figures 13 and 14, once an element of the xth section of substructure has been positioned, the corresponding freed vehicle(s) can return to the first extremity of the substructure along the service pathway. In particular:
- The vehicle(s) freed from the nth girder of the first plurality of girders is moved from the first transportation pathway 7 to the service pathway 9,
- The vehicle(s) freed from the yth platform is moved from the first transportation pathway 7 to the service pathway 9.

In the case where the service pathway is not at the level of the first transportation pathway, the vehicle(s) can be lifted by a crane and put down on the service pathway. Preferably it is lifted with the girder launcher crane.

If the xth section comprises additional girder(s) of the first plurality and/or platform(s), they are positioned similarly and the corresponding vehicles return to the first extremity similarly. The order in which the elements of the xth section are positioned is not limited. Also, some elements of the xth section can be positioned while other elements of the xth section or of subsequent sections are being paired with vehicles or conveyed to the second extremity. Preferably, the yth platform 8 is positioned first so that the vehicle(s) conveying the nth girder of the first plurality of girders can be more easily transferred from the first transportation pathway to the service pathway.

At the end of the step of erecting the substructure, the last girder of the first plurality of girders is positioned on the last piers of the substructure. These piers can be adjacent to or shared with a second portion of transportation structure erected or being erected as an extension of the relevant portion of transportation structure along the longitudinal axis of the transportation route. This second portion of transportation structure is erected from a second stocking site, possibly at the future site of a station, located downstream of the relevant portion. This second portion of transportation structure is built by erecting its substructure backwards of the erection of the substructure of the relevant portion. In other words, each portion is built from a stocking site in direction of another stocking site and at some point, the two portions join. The last girder of the first plurality of girders of the relevant portion is thus adjacent to the last girder of the first plurality of the second portion so that there is a continuity in the first transportation pathway.

Once all the sections of the substructure of the portion of the transportation structure have been assembled one after the other, the superstructure can be erected.

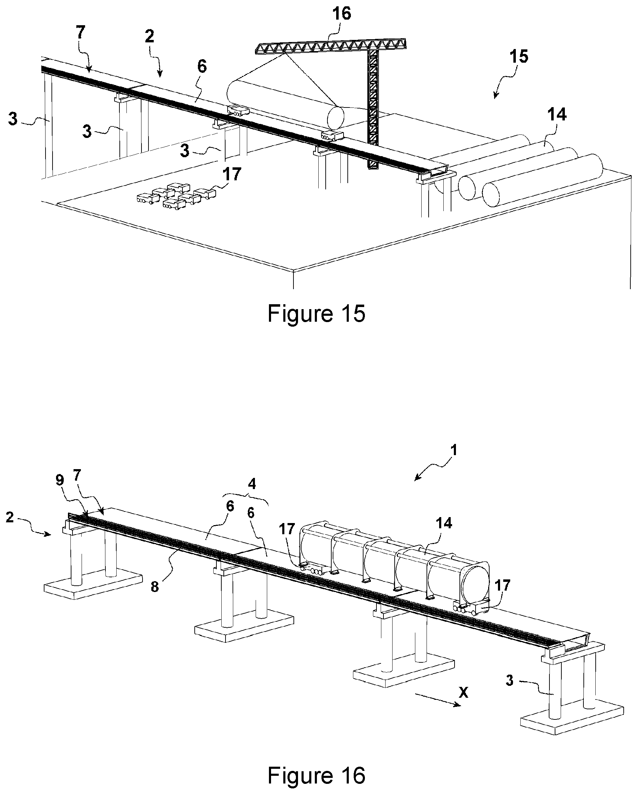

Overall, and as illustrated on Figures 15 to 19, the superstructure assembling is done by conveying, with vehicles, tube segments 14 along the first transportation pathway 7 to the use position of each tube segment, positioning each tube segment and having the vehicles return along the service pathway 9. As the tube segments are positioned on the substructure and block the transportation pathway, the superstructure assembling is done backwards compared to the substructure assembling. In other words, the tube segments are first positioned at the second extremity of the substructure and then positioned one in front of the other in direction of the first extremity of the substructure, i.e. one upstream of the other.

The tube segments are stocked at the stocking site 15 and conveyed from this stocking position. Consequently, the vehicles 17 are set up at the first extremity of the substructure with the tube segments 14 and they convey them from this first extremity to their use position along the first transportation pathway 7. Then the freed vehicles return to the first extremity of the substructure along the service pathway 7.

In particular, in a first step illustrated on Figures 15 to 17, a first tube segment 14 is conveyed with vehicle(s) 17 to the second extremity of the substructure 2. The vehicle(s) are freed from the first tube segment and can return along the service pathway 9. The first tube segment 14 is positioned on the last girder 6 of the substructure forming the second extremity of the substructure. Freeing the vehicle from the tube segment and positioning the tube segment can be done with a crane, possibly a girder launcher crane. In the case where a second portion of transportation structure is adjacent to the last girder of the substructure, the first tube segment can be connected to a tube segment of the second portion, preferably in an airtight connection.

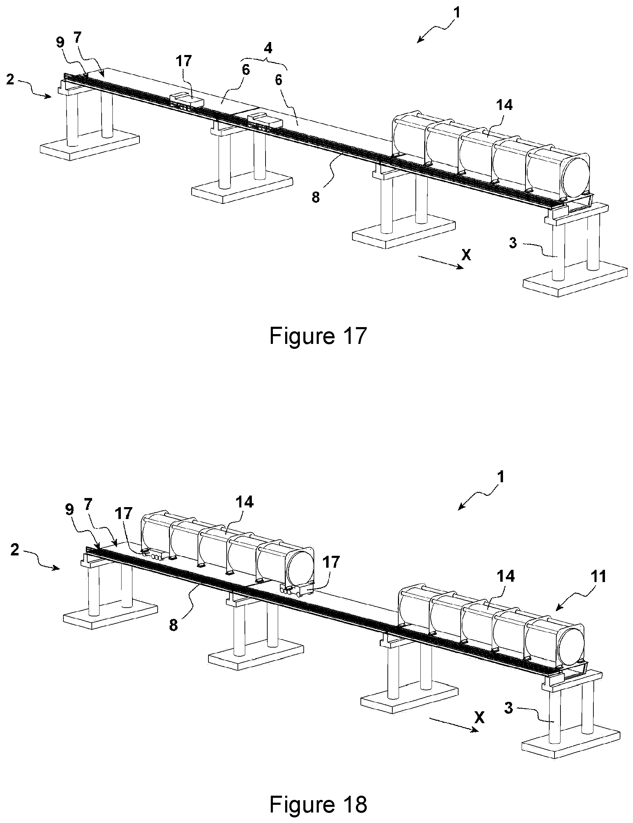

In a second step illustrated on Figure 18, a second tube segment 14 is conveyed with vehicle(s) 17 up to the first tube segment. The vehicle(s) are freed from the second tube segment and can return along the service pathway 9. The second tube segment is positioned adjacent to the first tube segment and upstream along the longitudinal axis X. The first and second segments can then be connected to one another, preferably in an airtight connection.

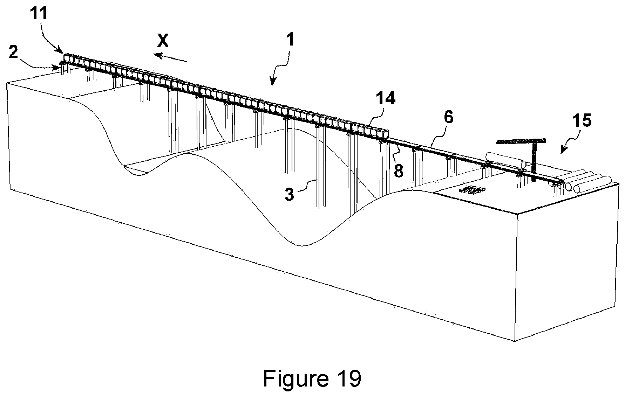

As illustrated on Figure 19, the next tube segments are conveyed and positioned similarly until the last tube segment is positioned at the first extremity of the substructure.

In a first variant of the tube segment positioning, the tube segment comprises shims 28 pre-assembled to at least part of the legs 27 of the tube segment. By simply positioning the tube segment on a girder, the shims allow to offset the deflection of the girder between piers. This speeds up the erection of the portion of transportation structure.

In a second variant of the tube segment positioning, shims are added in-between the girder and at least part of the legs when the tube segment is positioned on the girder. In that case, the thickness of each shim can be adjusted on the fly in case it differs from the results of the structural calculations.

In the case where the superstructure comprises a first assembly 12 of tube segments 14 and a second assembly 13 of tube segments 14 positioned on the first assembly, the tube segments of both assemblies can be conveyed individually along the first transportation pathway 7. At their use position, a tube segment of the first assembly is first positioned on the first transportation pathway 7 and then a tube segment of the second assembly is positioned on the tube segment of the first assembly. Alternatively, each tube segment of the first assembly of tube segments is coupled to a tube segment of the second assembly of tube segments at the stocking position and the coupled segments are then conveyed along the first transportation pathway. Tube segments of the first assembly and tube segments of the second assembly can be identical to ease logistics.

The erection method described above in relation to a portion of transportation structure comprising only one transportation pathway can be easily adapted to a portion of transportation structure comprising two transportation pathways.

## Claims

1. Portion (1) of transportation structure comprising:
- A substructure (2) comprising a plurality of piers, a first plurality (4) of girders (6) positioned on at least some of the piers and forming a first transportation pathway (7) running from a first extremity of the substructure to a second one,
- A first assembly (12) of tube segments (14), capable of being placed under low air pressure and through which pods may travel substantially free of air friction, the first assembly of tube segments been positioned on the first transportation pathway
**characterized by** each tube segment comprising:
∘ a main tube (26) with legs (27) distributed along the length of the main tube and suitable for the main tube to rest on the substructure on its legs,
∘ shims (28) positioned in-between the substructure and at least part of the legs, the thickness of each shim been adapted so that the deflection of the substructure between piers is offset.

2. Portion of transportation structure according to claim 1 wherein the main tube (26) is made of steel.

3. Portion of transportation structure according to claim 1 or 2 wherein the legs (27) are regularly distributed along the length of the main tube.

4. Portion of transportation structure according to any one of the preceding claims wherein the legs comprise brackets (29).

5. Portion of transportation structure according to any one of the preceding claims wherein the legs (27) are part of transverse reinforcements (23) connected to the main tube (26).

6. Portion of transportation structure according to claim 5 wherein each transverse reinforcement (23) extends substantially in a plane perpendicular to the longitudinal axis of the main tube.

7. Portion of transportation structure according any one of claims 5 or 6 wherein the transverse reinforcements (23) are substantially rectangles hollowed in their center for the passing of the main tube.

8. Portion of transportation structure according any one of claims 5 to 7 wherein the transverse reinforcements (23) comprise two legs.

9. Portion of transportation structure according any one of claims 5 to 8 further comprising longitudinal stiffeners (24) positioned between the transverse reinforcements (23).

10. Portion of transportation structure according to any one of the preceding claims wherein the thickness of each shim (28) is adapted so that the deflection of the main tube between piers is inferior to 10mm.

11. Portion of transportation structure according to any one of the preceding claims wherein the thickness of each shim is a function of the distance to the pier.

12. Portion of transportation structure according to any one of the preceding claims further comprising a second assembly (13) of tube segments (14), capable of being placed under low air pressure and through which pods may travel substantially free of air friction.

13. Portion of transportation structure according to claim 12 wherein the second assembly (13) of tube segments (14) is positioned on the first assembly (12) of tube segments.

14. Portion of transportation structure according to claim 12 wherein the second assembly (13) of tube segments (14) is positioned on a second transportation pathway (10) running from the first extremity of the substructure to the second one, alongside the first transportation pathway (7), and formed by a second plurality (5) of girders (6) positioned on at least some of the piers.

## Patentansprüche

1. Abschnitt (1) einer Transportstruktur, umfassend:
- einen Unterbau (2), umfassend eine Vielzahl von Pfeilern, eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft,
- eine erste Anordnung (12) von Rohrsegmenten (14), die in der Lage sind, unter niedrigen Luftdruck gesetzt zu werden und durch die sich Kapseln im Wesentlichen frei von Luftreibung bewegen können, wobei die erste Anordnung von Rohrsegmenten auf dem ersten Transportweg positioniert ist,
**dadurch gekennzeichnet, dass** jedes Rohrsegment Folgendes umfasst:
∘ ein Hauptrohr (26) mit Beinen (27), die über die Länge des Hauptrohrs verteilt und geeignet sind, damit das Hauptrohr auf seinen Beinen auf dem Unterbau aufliegt,
∘ Unterlegscheiben (28), die zwischen dem Unterbau und mindestens einem Teil der Beine positioniert sind, wobei die Stärke jeder einzelnen Unterlegscheibe angepasst ist, sodass die Durchbiegung des Unterbaus zwischen den Pfeilern ausgeglichen wird.

2. Transportstrukturabschnitt nach Anspruch 1, wobei das Hauptrohr (26) aus Stahl gefertigt ist.

3. Transportstrukturabschnitt nach Anspruch 1 oder 2, wobei die Beine (27) regelmäßig über die Länge des Hauptrohrs verteilt sind.

4. Transportstrukturabschnitt nach einem der vorherigen Ansprüche, wobei die Beine Halterungen (29) umfassen.

5. Transportstrukturabschnitt nach einem der vorherigen Ansprüche, wobei die Beine (27) Teil von Querverstärkungen (23) sind, die mit dem Hauptrohr (26) verbunden sind.

6. Transportstrukturabschnitt nach Anspruch 5, wobei sich jede Querverstärkung (23) im Wesentlichen in einer Ebene senkrecht zu der Längsachse des Hauptrohrs erstreckt.

7. Transportstrukturabschnitt nach einem der Ansprüche 5 oder 6, wobei die Querverstärkungen (23) im Wesentlichen Rechtecke sind, die in ihrer Mitte für den Durchgang des Hauptrohrs ausgehöhlt sind.

8. Transportstrukturabschnitt nach einem der Ansprüche 5 bis 7, wobei die Querverstärkungen (23) zwei Beine umfassen.

9. Transportstrukturabschnitt nach einem der Ansprüche 5 bis 8, ferner umfassend Längsversteifungen (24), die zwischen den Querversteifungen (23) positioniert sind.

10. Transportstrukturabschnitt nach einem der vorherigen Ansprüche, wobei die Stärke von jeder Unterlegscheibe (28) angepasst ist, sodass die Durchbiegung des Hauptrohrs zwischen den Pfeilern weniger als 10 mm ist.

11. Transportstrukturabschnitt nach einem der vorherigen Ansprüche, wobei die Stärke von jeder Unterlegscheibe von dem Abstand zu dem Pfeiler abhängig ist.

12. Transportstrukturabschnitt nach einem der vorherigen Ansprüche, ferner umfassend eine zweite Anordnung (13) von Rohrsegmenten (14), die in der Lage sind, unter niedrigen Luftdruck gesetzt zu werden und durch die sich Kapseln im Wesentlichen frei von Luftreibung bewegen können,

13. Transportstrukturabschnitt nach Anspruch 12, wobei die zweite Anordnung (13) von Rohrsegmenten (14) an der ersten Anordnung (12) von Rohrsegmenten angeordnet ist.

14. Transportstrukturabschnitt nach Anspruch 12, wobei die zweite Anordnung (13) von Rohrsegmenten (14) auf einem zweiten Transportweg (10), der von dem ersten Ende des Unterbaus zu dem zweiten Ende verläuft, entlang des ersten Transportwegs (7) positioniert ist, und durch eine zweite Vielzahl (5) von Trägern (6) gebildet ist, die auf mindestens einigen der Pfeiler positioniert sind.

## Revendications

1. Partie (1) de structure de transport comprenant :
- une sous-structure (2) comprenant une pluralité de piles, une première pluralité (4) de poutres (6) positionnées sur au moins certaines des piles et formant une première voie de passage de transport (7) s'étendant d'une première extrémité de la sous-structure à une seconde,
- un premier ensemble (12) de segments de tube (14) pouvant être placé sous une faible pression d'air et par le biais de laquelle des nacelles peuvent se déplacer sensiblement sans friction d'air, le premier ensemble de segments de tube étant positionné sur la première voie de passage de transport, **caractérisée par** chaque segment de tube qui comprend :
∘ un tube principal (26) avec des pattes (27) réparties le long de la longueur du tube principal et appropriées pour que le tube principal repose sur la sous-structure sur ses pattes,
∘ des cales (28) positionnées entre la sous-structure et au moins une partie des pattes, l'épaisseur de chaque cale étant adaptée de sorte que la déviation de la sous-structure entre les piles est décalée.

2. Partie de structure de transport selon la revendication 1, dans laquelle le tube principal (26) est réalisé à partir d'acier.

3. Partie de structure de transport selon la revendication 1 ou 2, dans laquelle les pattes (27) sont réparties, de manière régulière, le long de la longueur du tube principal.

4. Partie de structure de transport selon l'une quelconque des revendications précédentes, dans laquelle les pattes comprennent des supports (29).

5. Partie de structure de transport selon l'une quelconque des revendications précédentes, dans laquelle les pattes (27) font partie des renforcements transversaux (23) raccordés au tube principal (26).

6. Partie de structure de transport selon la revendication 5, dans laquelle chaque renforcement transversal (23) s'étend sensiblement dans un plan perpendiculaire à l'axe longitudinal du tube principal.

7. Partie de structure de transport selon l'une quelconque des revendications 5 ou 6, dans laquelle les renforcements transversaux (23) sont sensiblement des rectangles creux en leur centre pour le passage du tube principal.

8. Partie de structure de transport selon l'une quelconque des revendications 5 à 7, dans laquelle les renforcements transversaux (23) comprennent deux pattes.

9. Partie de structure de transport selon l'une quelconque des revendications 5 à 8, comprenant en outre des raidisseurs longitudinaux (24) positionnés entre les renforcements transversaux (23).

10. Partie de structure de transport selon l'une quelconque des revendications précédentes, dans laquelle l'épaisseur de chaque cale (28) est adaptée de sorte que la déviation du tube principal entre les piles est inférieure à 10 mm.

11. Partie de structure de transport selon l'une quelconque des revendications précédentes, dans laquelle l'épaisseur de chaque cale dépend de la distance par rapport à la pile.

12. Partie de structure de transport selon l'une quelconque des revendications précédentes, comprenant en outre un second ensemble (13) de segments de tube (14), pouvant être placé sous une faible pression d'air et par le biais de laquelle des nacelles peuvent se déplacer sensiblement sans friction d'air.

13. Partie de structure de transport selon la revendication 12, dans laquelle le second ensemble (13) de segments de tube (14) est positionné sur le premier ensemble (12) de segments de tube.

14. Partie de structure de transport selon la revendication 12, dans laquelle le second ensemble (13) de segments de tube (14) est positionné sur une seconde voie de passage de transport (10) s'étendant à partir de la première extrémité de la sous-structure jusqu'à une seconde, le long de la première voie de passage de transport (7) et formé par une seconde pluralité (5) de poutres (6) positionnées sur au moins certaines des piles.
